# EUROPEAN PATENT SPECIFICATION

(11) **EP 1 114 068 B1**
(45) Date of publication and mention of the grant of the patent: **29.10.2003**
(21) Application number: 99939623.7
(22) Date of filing: 09.08.1999
(51) Int. Cl.: C08F 8/04, C08C 19/02

(54) **PROCESS FOR HYDROGENATION OF CARBON-CARBON DOUBLE BONDS OF AN UNSATURATED POLYMER**
VERFAHREN ZUR HYDRIERUNG VON KOHLENSTOFF-KOHLENSTOFF DOPPELBINDUNGEN IN UNGESÄTTIGTEN POLYMEREN
PROCEDE D'HYDROGENATION DE LIAISONS DOUBLES CARBONE-CARBONE D'UN POLYMERE INSATURE

(30) Priority: 11.08.1998 NL 1009841
(43) Date of publication of application: 11.07.2001
(73) Proprietor: DSM IP Assets B.V., 6411 TE Heerlen (NL)
(72) Inventor: BELT, Johannus, Wilhelmus, NL-6164 CH Geleen (NL); VERMEULEN, Jacobus, Adriaan, Antonius, NL-6163 MH Geleen (NL); KÖSTERMANN, Mike, NL-5854 JA Nieuw-Bergen (NL)
(74) Representative: Dorrestijn, Antoon
(86) International application number: NL9900507
(87) International publication number: WO00009576

(56) References cited:
- EP-A- 0 801 079
- WO-A-91/06579
- DE-A- 3 520 103
- US-A- 4 221 872
- US-A- 4 452 950
- US-A- 5 314 967
- T. YOSOMIYA: "METALLIZATION OF POLYACRYLONITRILE BY REDUCTION OF POLYMER-INCORPORATED METAL IONS." ANGEWANDTE MAKROMOLEKULARE CHEMIE: APPLIED MACROMOLECULAR CHEMISTRY AND PHYSICS, vol. 197, no. 3400, May 1992 (1992-05), pages 49-58, XP000274695 BASEL, CH
- D. K. PARKER: "A NEW PROCESS FOR THE PREPARATION OF HIGHLY SATURATED NITRILE RUBBER IN LATEX FORM." RUBBER CHEMISTRY AND TECHNOLOGY, vol. 65, no. 1, March 1992 (1992-03), pages 245-258, XP000271010 OHIO, US
- PATENT ABSTRACTS OF JAPAN vol. 005, no. 106 (C-062), 10 July 1981 (1981-07-10) & JP 56 045907 A (NIPPON PEROXIDE CO., LTD.), 25 April 1981 (1981-04-25)

## Description

The invention relates to a process for hydrogenating carbon-carbon double bonds of an unsaturated polymer by adding to the unsaturated polymer (1) a reducing agent selected from the group comprising hydrazines and hydrazine-releasing compounds, (2) an oxidising compound and (3) a catalyst.

A similar process is known from US 4,452,950. This patent discloses that the reduction of carbon-carbon double bonds of an unsaturated polymer, with the polymer having been brought into the latex form, is carried out in the presence of a metal ion initiator. The metal ion initiator is a metal compound that reacts with hydrazine and is reduced by the hydrazine to a lower valence state. Examples of suitable metal ion initiators are Cu and Fe sulphates. After all reactants are added, the mixture is heated to the reflux temperature of the reaction mixture.

A drawback of this process is that the polymer is crosslinked early in the hydrogenation process and that heavy metals are left behind in the polymer after it is worked up.

The present invention aims to eliminate these drawbacks.

To that end, the invention provides a process in which the catalyst contains an element from group 13 of the Periodic Table of the Elements.

The Periodic Table of the Elements as used in the present application is published on the inside of the cover of the Handbook of Chemistry and Physics, 67th edition, 1986-1987 in accordance with the latest IUPAC nomenclature.

Furthermore, the process of the present invention presents the advantage that the reducing agent and oxidising compound may be present in equimolar amounts to at the most a minor excess relative to the double bonds of the unsaturated polymer to be reduced.

Also, the reaction is catalysed so well that a heating step may be omitted so that the hydrogenation process is much simplified.

Crosslinking of the latex during the hydrogenation process as described in US 4,452,950 is mentioned in US 5,039,737 and US 5,442,009. Both Patents disclose a process for breaking up the gel structures through post-treatment with ozone.

From application WO 91-A-06579 it is known to carry out a hydrogenation in the absence of a catalyst. However, this process employs a high hydrazine-to-unsaturated-polymer molar ratio in order to obtain a non-crosslinked polymer. Excess hydrazine subsequently needs to be worked up and destroyed, which from an economics point of view is costly and from an environmental point of view is unacceptable.

The unsaturated polymers that can be hydrogenated via the process of the present invention are composed of 5-100% by weight of a conjugated diene-monomer unit and 95-0% by weight of a vinyl-unsaturated monomer unit. Specific examples of conjugated diene-monomer units are 1,3-butadiene, 2,3-dimethyl butadiene, isoprene and 1,3-pentadiene. Specific examples of vinyl-unsaturated monomer units are nitriles (for example acrylonitrile and methacrylonitrile), vinyl aromatic hydrocarbons (for example styrene, (o-, m-, p-) alkylstyrenes and divinylbenzene) dialkenyl aromatics (for example diisopropenyl benzene), unsaturated carboxylic acids and esters thereof (for example acrylic acid, methacrylic acid, crotonic acid, itaconic acid, maleic acid, methyl acrylate, ethyl acrylate, butyl acrylate, 2-ethylhexyl acrylate and methyl methacrylate), vinylpyridine and vinyl esters (for example vinyl acetate).

The unsaturated polymers may be prepared in different manners for example through emulsion polymerisation, solution polymerisation and bulk polymerisation.

Specific examples of suitable unsaturated polymers are polybutadiene, polyisoprene, styrenebutadiene copolymers (SBR), acrylonitrile-butadiene copolymers (NBR), natural rubber, butadiene-isoprene rubber and terpolymers of butadiene, acrylonitrile and butylacrylate or acrylic acid.

Most preferably NBR is used.

The unsaturated polymers hydrogenated via the process of the present invention are characterised in that their backbone chain contains carbon-carbon double bonds that have an adverse effect on the polymer's thermal, photochemical and oxidative stability.

During the hydrogenation, the unsaturated polymers preferably are present in the latex form. The latex form is an aqueous emulsion of polymer, in which sundry additives for example soap and stabilisers may be present. A description of the latex form which is suitable for the hydrogenation of unsaturated polymers via the process of the invention is given in for example US 5,442,009.

The latex of the unsaturated polymer may be hydrogenated as such. The polymer concentration in the latex is in the range of from 1 to 70% by weight, preferably between 5 and 40 %wt.

The reducing agent is selected from the group comprising hydrazines and hydrazine-releasing compounds for example hydrazine hydrates, hydrazine acetate, hydrazine sulphate and hydrazine hydrochloride. If the unsaturated polymer is hydrogenated in latex, use is preferably made of hydrazine and hydrazine hydrate. Alternative hydrazine sources may be used if hydrogenation is effected in solution or in the melt and if the alternative hydrazine sources do not adversely effect the stability of the latex.

Latices formed from, for example, non-ionic soaps may be used in combination with hydrazine, hydrazine hydrate, hydrazine hydrochloride and hydrazine sulphate.

The hydrazine or hydrazine releasing compound preferably is present in a molar ratio of from 0.1:1 to 100:1 relative to these carbon-carbon double bonds. Preferably, this ratio lies between 0.8:1 and 5:1, most preferably between 0.9:1 and 2:1.

Oxidising compounds that are suitable for the process of the invention are for example air, oxygen, ozone, peroxides, hydroperoxides, iodine, iodates, hypochlorite and similar compounds. Particularly suitable oxidising compounds are selected from the group consisting of peroxides and hydroperoxides. Most preferably, use is made of hydrogen peroxide.

The oxidising compound is preferably present at a molar ratio of 0.1:1 to 100:1 relative to the carbon-carbon double bonds. More preferably, this ratio is between 0.8:1 and 5:1, most preferably between 0.9:1 and 2:1.

It is preferred for the catalyst be a compound which contains boron (B). Examples of preferred B-containing catalysts are compounds of the general formula 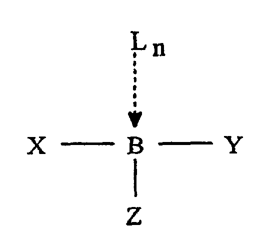 where X, Y and Z are chosen independently of one another from the group comprising R, =O, OR, OOR, NR₂, SR, PR₂, OC(=O)R and halogen atoms, where R is a H atom or an alkyl, aryl or cycloalkyl group having 1-20 carbon atoms, or a hydrocarbon group having 1-20 C atoms and containing a heteroatom from groups 14, 15, 16 and 17 of the Periodic Table of the Elements, or a polymerchain containing one or more polar groups; wherein X and Z and optionally Y may form a bridge; L is an electron-donating ligand, which may be bonded to either X, Y or Z; n = 0, 1 or 2.

Examples of suitable electron-donating ligands are for example water, an alcohol, pyridine, bipyridine, triazine, pyrrole compound, an imidazole compound, a pyrazole compound, a pyrimidine compound and a pyrazine compound, an ester, ether, a furan, tetrahydrofuran, pyrans, dioxan, phosphine, phosphide, phosphate, a thio compound or a polymer, for example a polyvinylalcohol or polyethyleneoxide.

Salts of abovementioned boron-containing compounds might also be applied.

Preferably L is chosen from the group comprising diols, polyvinylalcohols and polyethyleneoxide.

It is preferred for the catalyst to be chosen from the group consisting of borates, peroxiborates and boric acid (H₃BO₃). More preferably, the catalyst is boric acid. It is most preferred that boric acid is used in combination with a polyvinylalcohol.

The catalyst of the present invention may be combined with the oxidising compound so that less or no oxidising compound needs to be added separately. An example of a catalyst that also has an oxidising effect is peroxiborate.

Another preferred embodiment of the present invention is addition of boric acid to the reaction mixture together with the peroxide or hydroperoxide.

The molar ratio of the catalyst to the carbon-carbon double bonds of the unsaturated polymer is between 1:1000 and 10:1. The ratio preferably is between 1:50 and 1:2.

The order in which the compounds are added for the hydrogenation reaction may in principle be random. Preferably, however, the oxidising compound is added last and in such a way that the concentration of the oxidising compound remains low during the hydrogenation reaction.

The degree of hydrogenation is the percentage of carbon-carbon double bonds that is saturated after the hydrogenation reaction relative to the initial amount of double bonds. The process of the present invention provides polymers that as a rule have a degree of hydrogenation higher than 60%. Preferably, the degree of hydrogenation is higher than 80%. The process is eminently suitable for preparing polymers having a degree of hydrogenation higher than 90%.

The hydrogenation reaction temperature normally is between 0° and 250°C. The temperature preferably is between 20° and 100°C. A reaction temperature between 40° and 80°C is particularly preferable. Most preferable is a reaction temperature between 60 °C and 80 °C, which results in a high catalyst activity, so that low catalyst concentrations can be used.

During hydrogenation in a latex, a minor amount of solvent for the unsaturated polymer may be present. In that case, the amount of solvent may vary between 0 and 20%wt (solvent relative to polymer).

The hydrogenation time normally is between 30 minute and 24 hours. The hydrogenation time preferably is between 1 hour and 12 hours.

The process is illustrated by the following examples.

In almost all cases the degree of hydrogenation was determined with the aid of ¹H-NMR in a Bruker 200 MHz instrument. The measurement was conducted on polymer precipitated in isopropanol, that was after precipitation dried with filter paper and immediately dissolved in deuterated chloroform. The degree of hydrogenation was calculated from the ratio of the integrals of the olefinic protons, which are between 5.2 and 5.6 ppm, and the proton adjacent to the nitrile group, being between 2.35 and 2.65 ppm.

In some cases (expressly indicated) the degree of hydrogenation was determined by Raman spectroscopy (using a Spectrum 2000 NIR FT Raman instrument).

The C=C stretch vibrations of the vinyl, cis and trans bonds can be seen in the Raman spectrum between 1600 and 1700 cm⁻¹. The C≡N stretch vibration can be seen at 2240 cm⁻¹. The peak height ratio between the C=C stretch and the C≡N stretch relative to the blank was used for determining the degree of hydrogenation, it being assumed that the stretch vibration of the nitrile group does not change significantly as a result of the unsaturated polymer being hydrogenated.

### Example 1

A solution of 0.68g of H₃BO₃ (11 mmoles) and 6.31 g of N₂H₄.1H₂O (hydrazine monohydrate, 126 mmoles) in 5.5g of water were added to a 250-ml glass three-neck flask equipped with a glass top stirrer, cooler and peristaltic pump and containing 25g of latex, Nysin® 33/3 (a copolymer of 67% butadiene with 33% acrylonitrile) with a polymer content of 25% and containing a total of 77.5 mmoles of carbon-carbon double bonds. A few drops of silicone oil were added as defoamer.

The latex was heated to 40°C and stirred for some minutes. While the contents were being stirred, 13.30 g of a 30% solution of H₂O₂ in water (117 mmoles) were added drop-wise during a period of 6 hours with the aid of the peristaltic pump. On being hydrogenated, the 5 grams of latex were poured into 50 grams of isopropanol. The polymer dissolved completely in chloroform (no gel particles were visible). The degree of hydrogenation, determined by ¹H-NMR, was 96%.

### Example 2

Example I was repeated except that the amount of hydrazine was varied as shown in Table 1. The H₂O₂ was added drop-wise in an equimolar amount relative to hydrazine.
All samples dissolved completely in chloroform (no gel particles were visible).

**Table 1.**

| Degree of hydrogenation as a function of the amount of hydrazine. | | | |
|---|---|---|---|
| Ex. | Hydrazine monohydrate (grams) | H₂N-NH₂.H₂O equivalents relative to C=C | Degree of hydrogenation (%) |
| II.1 | 3.1 | 0.8 | 70 |
| II.2 | 3.9 | 1.0 | 85 |
| II.3 | 4.3 | 1.1 | 89 |
| II.4 | 4.7 | 1.2 | 93 |
| I | 6.31 | 1.6 | 96 |

### Example III

Example I was repeated except that the H₂O₂ was added in 12 hours, with two different amounts of hydrazine. Slow addition of hydrogenperoxide gives an increase in the degree of hydrogenation. All samples dissolved completely in chloroform (no gel particles visible).

**Table 2.**

| Degree of hydrogenation at 12 hours of reaction time and variable amount of hydrazine. | | | | |
|---|---|---|---|---|
| Ex. | Hydrazine monohydrate (grams) | H₂N-NH₂.H₂O equivalents relative to C=C | time (hours) | Degree of hydrogenation (%) |
| III.1 | 3.9 | 1.0 | 12 | 87 |
| III.2 | 4.7 | 1.2 | 12 | 97 |

### Example IV

Example I was repeated except that 4.68 grams of N₂H₄.1H₂O (hydrazine monohydrate) and 0.16 grams of boric acid were added, and the reaction was carried out at different temperatures. Low amounts of hydrazine monohydrate and boric acid give a lower degree of hydrogenation. The degree of hydrogenation is increased by raising the temperature of the reaction. All samples dissolved in chloroform.

**Table 3.**

| Degree of hydrogenation as a function of temperature | | |
|---|---|---|
| Ex | Temperature (°C) | Degree of hydrogenation (%) |
| IV.1 | 40 | 60 |
| IV.2 | 70 | 90 |

### Example V

Example I was repeated except that the amount of boric acid was varied. Increase of the amount of boric acid, gives an increase in the degree of hydrogenation. All samples dissolved completely in chloroform (no gel particles visible).

**Table 4.**

| Degree of hydrogenation as a function amount of boric acid added. | | |
|---|---|---|
| Ex. | Boric acid (grams) | Degree of hydrogenation (%) |
| V.1 | 0 | 60 |
| V.2 | 0.17 | 80 |
| V.3 | 0.34 | 85 |
| V.4 | 0.51 | 96 |
| V.5 | 0.85 | 93 |

### Example VI

Example IV.1 was repeated, except that boric acid was dissolved in the hydrogenperoxide solution, and added to the latex together with the hydrogenperoxide.
The degree of hydrogenation increased considerably upon premixing of boric acid with the hydrogenperoxide.

**Table 5.**

| Effect of premixing of boric acid with hydrogenperoxide. | | |
|---|---|---|
| Ex | Boric acid premixed with H₂O₂ | Degree of hydrogenation (%) |
| IV.1 | no | 60 |
| VI.1 | yes | 91 |

### Example VII

Example IV.1 was repeated, except that ligands L were added to the latex with the boric acid. Addition of ligands increases the catalytic activity of boric acid.

**Table 6.**

| Addition of ligands L to the reaction mixture. | | | |
|---|---|---|---|
| Ex. | Ligand L | gram | Degree of hydrogenation (%) |
| IV.1 | no | -- | 60 |
| VII.1 | ethanol | 0.12 | 70 |
| VII.2 | 1-phenyl-1,2-ethanediol | 0.34 | 70 |
| VII.3 | polyethyleneglycol, OH-terminated, Mw 35.000 | 0.15 | 83 |
| VII.4 | polyvinylalcohol, 98% hydrolysed, Mw 20.000 | 0.15 | 93 |

### Comparative experiment A

An amount of N₂H₄.1H₂O (hydrazine monohydrate), as shown in Table 1, dissolved in 5.5 grams of water, were added to a 250-ml glass three-neck flask equipped with a glass top stirrer, cooler and peristaltic pump and charged with 25g of latex, Nysin 33/3 with a polymer content of 25%. A few drops of silicone oil were added as defoamer.
- The hydrogenation reaction was carried out as in Example I, with H₂O₂ in a 30% solution of H₂O₂ in water being added drop-wise with the aid of the peristaltic pump in an equimolar amount relative to hydrazine.

All samples dissolved completely in chloroform (no gel particles were visible).

**Table 7.**

| Degree of hydrogenation as a function of the amount of hydrazine required in the absence of boric acid | | | |
|---|---|---|---|
| Comp. ex. | Hydrazine monohydrate (grams) | H₂N-NH₂.H₂O equivalents relative to C=C | Degree of hydrogenation (%) |
| A.1 | 3.9 | 1.0 | 55 |
| A.2 | 5.9 | 1.5 | 67 |
| A.3 | 7.6 | 2.0 | 80 |
| A.4 | 9.8 | 2.5 | 94 |

### Comparative experiment B

4.3 g of N₂H₄.1H₂O (hydrazine monohydrate, 1.1 equivalent relative to C=C), followed by 0.0018 grams of CuSO4.5H2O in 5 grams of water were added to a 250-ml glass three-neck flask equipped with a glass top stirrer, cooler and peristaltic pump and charged with 25g of latex, Nysin 33/3 with a polymer content of 25%. A few drops of silicone oil were added as defoamer. The latex was heated to 40 °C and stirred for some minutes. While the contents were being stirred, 10 g of a 30% solution of H₂O₂ in water were added drop-wise with the aid of the peristaltic pump. During the hydrogenation, 1-gram latex samples were taken and these were precipitated in 10 grams of isopropanol. The polymer's solubility was directly measured visually in chloroform.

**Table 8.**

| Solubility as a function of H₂O₂ added and degree of hydrogenation | | | |
|---|---|---|---|
| Ex. | H₂O₂ added (%) | Degree of hydrogenation (%)^{x2} | Solubility |
| B.1 | 13.9 | 14 | soluble |
| B.2 | 33 | 28 | soluble |
| B.3 | 47 | - | gelled |
| A.4 | 100 | 71 | gelled |

The polymers in Experiments B.3 and B.4 were subjected to a Soxhlet extraction with chloroform, with the aid of which the gel content was determined. The sample in Experiment B.3 contained 70% gel and the sample in Experiment B.4 contained more than 90%. The degree of hydrogenation in Experiment B.4 was determined by Raman spectrometry.

### Comparative example C

5.8 g of N₂H₄.1H₂O (hydrazine monohydrate, 1.5 equivalent relative to C=C), followed by an amount of CuSO4.5H2O as indicated in Table 7 in 5 gram of water were added to 250-ml glass three-neck flask equipped with a glass top stirrer, cooler and peristaltic pump and charged with 25g of latex, Nysin 33/3 with a polymer content of 25%.
The latex was heated to 50 °C and stirred for some minutes. While the contents were being stirred, 13.1 g of a 30% solution of H₂O₂ in water were added drop-wise with the aid of the peristaltic pump. After the hydrogenation, 1-gram latex samples were taken and these were precipitated in 10 grams of isopropanol. The polymer's solubility was directly measured visually in chloroform (see Table 7).

**Table 9.**

| Solubility as a function of degree of hydrogenation | | | |
|---|---|---|---|
| Comp. ex. | CuSO4.5H2O (grams) | Degree of hydrogenation (%)^{x1} | Solubility |
| C.1 | 0.0009 | 80 | gelled |
| C.2 | 0.0019 | 89 | gelled |
| C.3 | 0.0095 | 55 | gelled |
| C.4 | 0.017 | 32 | gelled |

The polymer obtained in each experiment was subjected to a Soxhlet extraction with chloroform. The gel content was found to be higher than 60% in all cases. The degree of hydrogenation of the samples in Comparative Example C was determined by Raman spectrometry.

## Claims

1. Process for hydrogenating carbon-carbon double bonds of an unsaturated polymer by adding to the unsaturated polymer (1) a reducing agent selected from the group comprising hydrazines and hydrazine-releasing compounds, (2) an oxidising compound and (3) a catalyst, **characterised in that** the catalyst contains an element from group 13 of the Periodic Table of the Elements.

2. Process according to Claim 1, **characterised in that** the catalyst is a compound which contains boron.

3. Process according to Claim 2, **characterised in that** the catalyst is a compound of the general formula 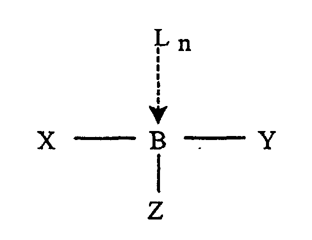 wherein X, Y and Z are chosen independently of one another from the group comprising R, =O, OR, OOR, NR₂, SR, PR₂, OC(=O)R and halogen atoms, where R is a H atom or an alkyl, aryl or cycloalkyl group having 1-20 carbon atoms, or a hydrocarbon group having 1-20 C atoms and containing a heteroatom from groups 14, 15, 16 and 17 of the Periodic Table of the Elements, or a polymerchain containing one or more polar groups; wherein X and Z and optionally Y may form a bridge; L is an electron-donating ligand, which may be bonded to either X, Y or Z; n = 0, 1 or 2.

4. Process according to Claim 3, **characterised in that** the catalyst is boric acid.

5. Process according to Claim 4, **characterised in that** boric acid is used in combination with a polyvinylalcohol.

6. Process according to anyone of claims 1-5, **characterized in that** the molar ratio of the catalyst to the carbon-carbon double bonds of the unsaturated polymer is between 1:50 and 1:2.

7. Process according to anyone of claims 1-6, **characterized in that** the oxidising compound is selected from the group consisting of peroxides and hydroperoxides.

8. Process according to anyone of Claims 4-7, **characterised in that** the boric acid is added to the reaction mixture together with the peroxide or hydroperoxide.

9. Process according to Claim 7, **characterised in that** the oxidising agent is hydrogen peroxide.

10. Process according to anyone of Claims 1-9, **characterised in that** the molar ratio of oxidising compound to carbon-carbon double bonds is between 0.9:1 and 2:1.

11. Process according to any one of Claims 1-10,
**characterised in that** the molar ratio of hydrazine or hydrazine releasing compound to carbon-carbon double bonds is between 0.9:1 and 2:1.

12. Process according to any one of Claims 1-11, **characterised in that** the reducing agent is selected from the group consisting of hydrazine and hydrazine hydrates.

13. Process according to any one of Claims 1-12, **characterised in that** the unsaturated polymer is present in the latex form.

## Patentansprüche

1. Verfahren zum Hydrieren von Kohlenstoff-Kohlenstoff-Doppelbindungen eines ungesättigten Polymers durch Zugeben (1) eines Reduktionsmittels, ausgewählt aus der Gruppe umfassend Hydrazine und Hydrazin-freisetzende Verbindungen, (2) einer oxidierenden Verbindung und (3) eines Katalysators zu dem ungesättigten Polymer, **dadurch gekennzeichnet, dass** der Katalysator ein Element aus Gruppe 13 der Tabelle des Periodensystems der Elemente enthält.

2. Verfahren gemäß Anspruch 1, **dadurch gekennzeichnet, dass** der Katalysator eine Verbindung ist, welche Bor enthält.

3. Verfahren gemäß Anspruch 2, **dadurch gekennzeichnet, dass** der Katalysator eine Verbindung der allgemeinen Formel 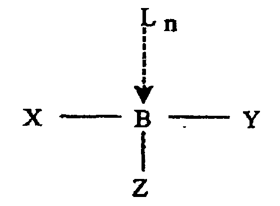 ist, worin X, Y und Z unabhängig voneinander ausgewählt werden aus der Gruppe umfassend R, =O, OR, OOR, NR₂, SR, PR₂, OC(=O)R und Halogenatome, wo R für ein H-Atom oder eine Alkyl, Aryl oder Cycloalkylgruppe mit 1-20 Kohlenstoffatomen, oder eine Kohlenwasserstoffgruppe mit 1-20 C-Atomen steht und welche ein Heteroatom aus Gruppen 14, 15, 16 und 17 der Tabelle des Periodensys tems der Elemente enthält, oder eine Polymerkette, welche eine oder mehrere polare Gruppen enthält; worin X und Z und gegebenenfalls Y eine Brücke bilden können;
L einen Elektronen-Donator Ligand darstellt, welcher an entweder X, Y oder Z gebunden sein kann;
n = 0, 1 oder 2.

4. Verfahren gemäß Anspruch 3, **dadurch gekennzeichnet, dass** der Katalysator Borsäure ist.

5. Verfahren gemäß Anspruch 4, **dadurch gekennzeichnet, dass** Borsäure in Verbindung mit einem Polyvinylalkohol verwendet wird.

6. Verfahren gemäß einem der Ansprüche 1-5, **dadurch gekennzeichnet, dass** das Molverhältnis des Katalysators zu den Kohlenstoff-Kohlenstoff-Doppelbindungen des ungesättigten Polymers zwischen 1:50 und 1:2 beträgt.

7. Verfahren gemäß einem der Ansprüche 1-6, **dadurch gekennzeichnet, dass** die oxidierende Verbindung ausgewählt wird aus der Gruppe bestehend aus Peroxiden und Hydroperoxiden.

8. Verfahren gemäß einem der Ansprüche 4-7, **dadurch gekennzeichnet, dass** die Borsäure zusammen mit dem Peroxid oder Hydroperoxid zu dem Umsetzungsgemisch zugegeben wird.

9. Verfahren gemäß Anspruch 7, **dadurch gekennzeichnet, dass** das Oxidationsmittel Wasserstoffperoxid ist.

10. Verfahren gemäß einem der Ansprüche 1-9, **dadurch gekennzeichnet, dass** das Molverhältnis von oxidierender Verbindung zu Kohlenstoff-Kohlenstoff-Doppelbindungen zwischen 0,9:1 und 2:1 beträgt.

11. Verfahren gemäß einem der Ansprüche 1-10, **dadurch gekennzeichnet, dass** das Molverhältnis von Hydrazin oder Hydrazinfreisetzender Verbindung zu Kohlenstoff-Kohlenstoff-Doppelbindungen zwischen 0,9:1 und 2:1 beträgt.

12. Verfahren gemäß einem der Ansprüche 1-11, **dadurch gekennzeichnet, dass** das Reduktionsmittel ausgewählt wird aus der Gruppe bestehend aus Hydrazin und Hydrazinhydraten.

13. Verfahren gemäß einem der Ansprüche 1-12, **dadurch gekennzeichnet, dass** das ungesättigte Polymer in der Latexform vorhanden ist.

## Revendications

1. Procédé destiné à hydrogéner des doubles liaisons carbone-carbone d'un polymère insaturé en ajoutant au polymère insaturé (1) un agent de réduction choisi dans le groupe formé par les hydrazines et les composés libérant de l'hydrazine, (2) un composé d'oxydation et (3) un catalyseur, **caractérisé en ce que** le catalyseur contient un élément du groupe 13 de la Classification Périodique des Eléments.

2. Procédé selon la revendication 1, **caractérisé en ce que** le catalyseur est un composé qui contient du bore.

3. Procédé selon la revendication 2, **caractérisé en ce que** le catalyseur est un composé de formule générale : 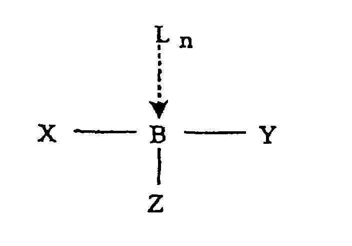 dans laquelle X, Y et Z sont choisis, indépendamment les uns des autres, dans le groupe formé par R, =O, OR, OOR, NR₂, SR, PR₂, OC(=O)R et les atomes d'halogène, où R est un atome d'hydrogène ou un groupe alkyle, aryle ou cycloalkyle possédant 1 à 20 atomes de carbone, ou un groupe hydrocarboné possédant 1 à 20 atomes de carbone et contenant un hétéroatome provenant des groupes 14, 15, 16 et 17 de la Classification Périodique des Eléments, ou une chaîne polymère contenant un ou plusieurs groupes polaires ; dans laquelle X et Z et, éventuellement, Y peuvent former un pont ;
L est un ligand donneur d'électron, qui peut être lié à X, à Y ou à Z ;
n = 0, 1 ou 2.

4. Procédé selon la revendication 3, **caractérisé en ce que** le catalyseur est l'acide borique.

5. Procédé selon la revendication 4, **caractérisé en ce que** l'acide borique est utilisé en combinaison avec un poly(alcool de vinyle).

6. Procédé selon l'une quelconque des revendications 1 à 5, **caractérisé en ce que** le rapport molaire du catalyseur aux doubles liaisons carbone-carbone du polymère insaturé est compris entre 1:50 et 1:2.

7. Procédé selon l'une quelconque des revendications 1 à 6, **caractérisé en ce que** le composé d'oxydation est choisi dans le groupe formé par les peroxydes et les hydroperoxydes.

8. Procédé selon l'une quelconque des revendications 4 à 7, **caractérisé en ce que** l'acide borique est ajouté au mélange réactionnel conjointement avec le peroxyde ou l'hydroperoxyde.

9. Procédé selon la revendication 7, **caractérisé en ce que** l'agent d'oxydation est le peroxyde d'hydrogène.

10. Procédé selon l'une quelconque des revendications 1 à 9, **caractérisé en ce que** le rapport molaire du composé d'oxydation aux doubles liaisons carbone-carbone est compris entre 0,9:1 et 2:1.

11. Procédé selon l'une quelconque des revendications 1 à 10, **caractérisé en ce que** le rapport molaire de l'hydrazine ou du composé libérant de l'hydrazine aux doubles liaisons carbone-carbone est compris entre 0,9:1 et 2:1.

12. Procédé selon l'une quelconque des revendications 1 à 11, **caractérisé en ce que** l'agent de réduction est choisi dans le groupe formé par l'hydrazine et les hydrates d'hydrazine.

13. Procédé selon l'une quelconque des revendications 1 à 12, **caractérisé en ce que** le polymère insaturé est présent sous forme de latex.
